(19) Europäisches Patentamt

European Patent Office

Office européen des brevets

(11) **EP 0 751 377 B1**

(12) **EUROPÄISCHE PATENTSCHRIFT**

(45) Veröffentlichungstag und Bekanntmachung des Hinweises auf die Patenterteilung:
**03.12.2003 Patentblatt 2003/49**

(51) Int Cl.7: **G01F 1/698**, G01F 1/69, G01F 1/72, F02D 41/18, G01P 5/12, G01P 13/04

(21) Anmeldenummer: **96102871.9**

(22) Anmeldetag: **27.02.1996**

(54) **Vorrichtung zur Bestimmung des Luftmassenstromes**

Mass flow determination device

Dispositif pour la détermination du débit massique

(84) Benannte Vertragsstaaten:
**DE ES FR GB IT**

(30) Priorität: **29.06.1995 DE 19523700**

(43) Veröffentlichungstag der Anmeldung:
**02.01.1997 Patentblatt 1997/01**

(73) Patentinhaber: **Pierburg GmbH**
**41460 Neuss (DE)**

(72) Erfinder:
• **Wienecke, Thomas**
**41564 Kaarst (DE)**
• **Lösing, Karl-Heinrich, Dr.**
**46519 Alpen (DE)**

• **Liedtke, Günter**
**45239 Essen (DE)**

(56) Entgegenhaltungen:
DE-A- 3 935 778          DE-A- 4 408 270
FR-A- 2 512 548          FR-A- 2 599 153

• PATENT ABSTRACTS OF JAPAN vol. 013 no. 471 (P-949) ,25.Oktober 1989 & JP-A-01 185416 (MITSUBISHI ELECTRIC CORP) 25.Juli 1989,
• PATENT ABSTRACTS OF JAPAN vol. 014 no. 376 (P-1092) ,14.August 1990 & JP-A-02 141623 (JAPAN ELECTRON CONTROL SYST CO LTD) 31.Mai 1990,
• PATENT ABSTRACTS OF JAPAN vol. 950 no. 001 & JP-A-07 005009 (HITACHI LTD) 10.Januar 1995,

**Beschreibung**

Die Erfindung betrifft eine Vorrichtung zur Bestimmung des Luftmassenstromes in einem Ansaugkanal einer Brennkraftmaschine, bestehend aus einem Ansaugkanalabschnittgehäuse, in dem auf einem Träger in Strömungsrichtung hintereinander ein Temperaturmeßelement und ein thermischer Massenstromsensor angeordnet sind.

Eine derartige Vorrichtung ist beispielsweise aus der DE-C2-31 35 793 bekannt, in der das Problem behandelt wird: Bei der Messung der von einer Brennkraftmaschine angesaugten Luftmasse weist das Meßsignal einen Fehler auf, der darauf beruht, daß die Vorrichtung auch die Masse der infolge der Pulsation im Ansaugrohr der Brennkraftmaschine zurückströmenden Luft ermittelt.

In dieser Schrift sind Mittel angegeben, mit denen das die strömende Mediummasse darstellende Meßsignal in Abhängigkeit von der Strömungsrichtung mittels eines Strömungsrichtungsgebers derart beeinflußbar ist, daß das Meßsignal während einer entgegen der gewünschten Strömungsrichtung des Mediums verlaufenden Strömung unterdrückt wird. Hierbei weist der Strömungsrichtungsgeber einen ersten temperaturabhängigen Indikationswiderstand auf, der an einem Träger angeordnet ist und dessen Widerstandswert durch eine Widerstandsmeßschaltung erfaßt und mit einem durch eine weitere Widerstandsmeßschaltung erfaßten Widerstandswert eines in Strömungsrichtung mit Abstand zum ersten Indikationswiderstand angeordneten zweiten temperaturabhängigen Indikationswiderstand verglichen wird, wobei die Differenz der Widerstandswerte zur Beeinflussung des Meßsignals dient. Hierfür ist ein erheblicher Schaltungs- und Bauteileaufwand zu betreiben.

Hiervon ausgehend liegt der Erfindung die Aufgabe zugrunde, die gattungsgemäße Vorrichtung derart zu gestalten, daß bei verringertem Bauteileaufwand eine Kompensation des durch Pulsation verursachten Meßsignalfehlers erreichbar wird.

Diese Aufgabe ist durch die im Anspruch 1 angegebenen Merkmale gelöst worden. Vorteilhafte Weiterbildungen sind mit den Unteransprüchen angegeben.

Die Erfindung basiert auf der Erkenntnis, daß an einem angeströmten Körper bei laminarer Umströmung an dem der Strömung entgegengerichteten Ende des umströmten Körpers ein größerer Wärmeübergang in das strömende Medium stattfindet als an dem der Strömung abgewandten Ende des Körpers. Hiervon macht die Erfindung Gebrauch.

Mit der Erfindung liegt ein sehr einfach auszuführender Vorschlag vor, der gegenüber dem Stand der Technik mit weniger Bauteilen realisiert werden kann und auch bezüglich des Schaltungsaufbaus sehr einfach ist.

Ein Ausführungsbeispiel der Erfindung ist in der Zeichnung dargestellt und wird nachfolgend beschrieben.

Diese zeigt:

Fig. 1
eine schematische Darstellung einer erfinderischen Vorrichtung zur Bestimmung des Luftmassenstromes;

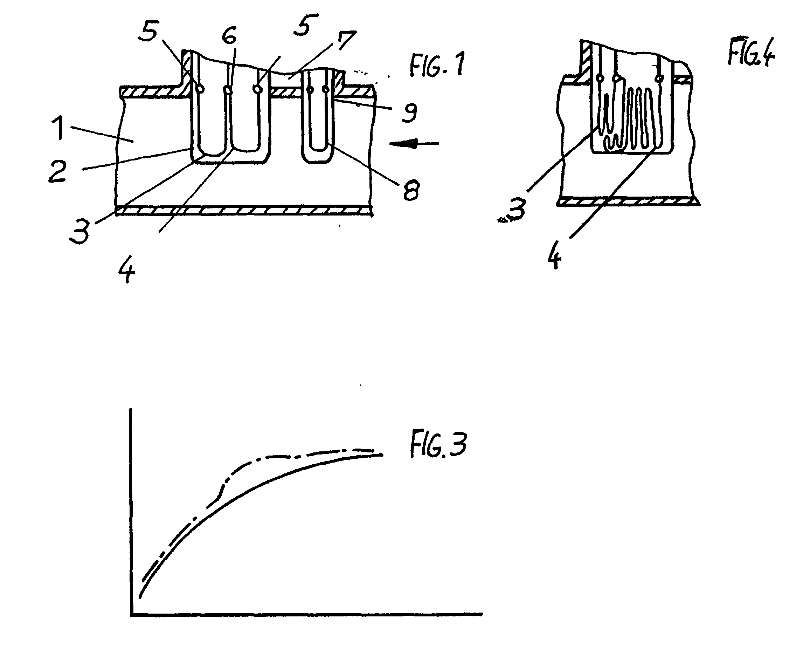

Fig. 2
eine Prinzipschaltung der Vorrichtung nach Fig. 1,

Fig. 3
ein Diagramm mit Kennlinie des Luftmassenstromes über dem Ausgangssignal mit und ohne die erfinderischen Merkmale.

Fig. 4
eine alternative Ausführung der Vorrichtung nach Fig. 1.

Fig. 1 zeigt einen Ansaugkanalabschnitt 1 einer Brennkraftmaschine mit einem ersten Träger 2, der zwei mäanderförmige Massenstromsensoren 3, 4 aufweist, die neben Endanschlüssen 5 einen Anfangsanschluß 6 aufweisen, und in der angegebenen Reihenfolge in Luftströmungsrichtung hintereinander liegen. Die Anschlüsse 5, 6 sind mit elektrischen, nicht dargestellten Leitungen/Anschlüssen mit einer Auswerteschaltung 7 verbunden.

Die Massenstromsensoren 3, 4 sind vorteilhafterweise symmetrisch ausgeführt, womit sich bei Hin- und Rückströmung vergleichbare Widerstandsänderungen ergeben, da sich jeweils am Anfang des angeströmten Trägers 2 eine größere Abkühlung ergibt als am Ende, bedingt durch die Ablösung der Luftgrenzschicht vom Träger zum Ende hin.

Für Motoren mit extremer Rückströmung kann es jedoch auch vorteilhaft sein, die Massenstromsensoren 3, 4 auf dem Träger 2 so anzuordnen, daß der von der Rückströmung beaufschlagte Massenstromsensor 4 einen größeren Flächenanteil als der von der Hinströmung beaufschlagte belegt (Fig. 4), womit eine geringere Rückströmgeschwindigkeit ausgeglichen werden kann.

Für diesen Einsatzfall kann zusätzlich vorgesehen werden, daß die Massenstromsensoren 3, 4 unterschiedlich große Widerstände aufweisen. Hierbei hat es sich als günstig herausgestellt, Flächenanteile und Widerstandswerte wie 2 zu 1 aufzuteilen.

Es ist weiterhin vorgesehen, daß ein bekanntes Temperaturmeßelement 8 auf einem weiteren Träger 9 angeordnet ist, der mit Abstand 10 vor dem ersten Träger 2 angeordnet ist. Diese Maßnahme stellt die direkte Anströmung des ersten Trägers 2 -wie bei einer Rückströmung- auch bei Hinströmung sicher.

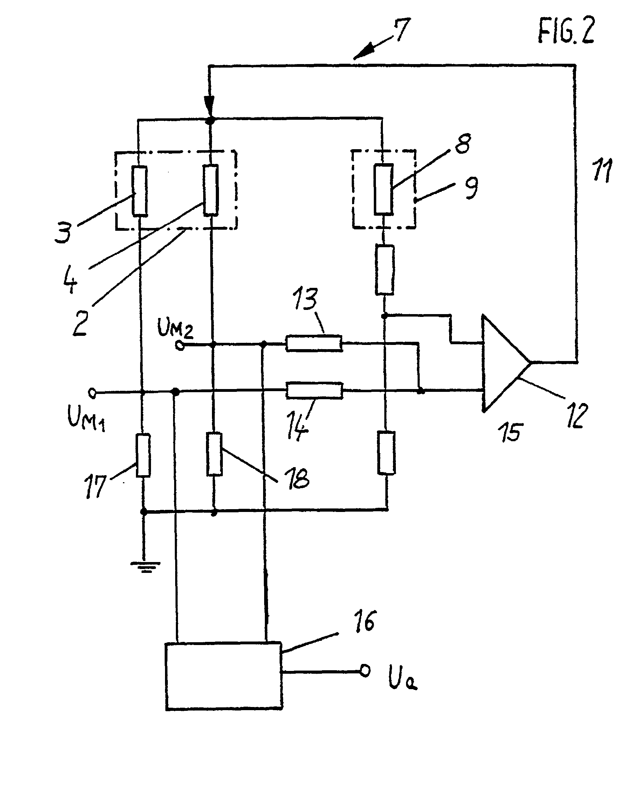

Fig. 2 zeigt die elektrische Prinzipschaltung des erfindungsgemäßen Luftmassenstromsensors mit auf dem strichpunktiert dargestellten Träger 2 angeordneten Massenstromsensoren 3, 4, die mit ihren Anfangsanschlüssen 6 mit einer Ausgangsleitung 11 eines Regelverstärkers 12 verbunden sind und mit ihren Endanschlüssen 5 über Entkopplungswiderstände 13, 14 zusammengeführt und einem Eingang 15 des Regelverstärkers 12 ausgeschaltet sind. Die Endanschlüsse 5 sind darüber hinaus direkt mit einer elektronischen Schaltung 16 verbunden und über Entkopplungswiderstände 17, 18 mit Masse.

Das Temperaturmeßelement 8 ist auf dem strichpunktiert dargestellten Träger 9 angeordnet und in einem zweiten Brückenzweig geschaltet, wobei die Verlustleistung über dem Temperaturmeßelement 8 sehr gering ist, so daß sich die Temperatur des Meßelements 8 über der sich ändernden Brückenspannung praktisch nicht ändert, sondern der Temperatur der vorbeiströmenden Luftmasse entspricht.

Die über die Endanschlüsse 5 der elektronischen Schaltung 16 ausgeschalteten Endanschluß-Spannungssignale $U_{M1}$, $U_{M2}$ werden durch die Schaltung 16 nach folgender Formel umgeformt,

$$U_A = \frac{U_{M1} + U_{M2}}{2} + K\,(U_{M1} - U_{M2}),$$

wobei

$U_A$ = dem Wert für die strömende Luftmasse entspricht, der als Rohwert z. B. dem Steuergerät einer Einspritzung zur weiteren Verarbeitung zugeführt wird.

K stellt nur einen der Gesamtvorrichtung angepaßten Faktor dar.

Es kann vorteilhaft sein, wenn der Wert K ($U_{M1}$ - $U_{M2}$) aus vorstehender Formel auf in Abhängigkeit von $U_{M1}$, $U_{M2}$ festgelegte Höchstwerte begrenzt wird, um eine Überkompensation der Rückströmung zu vermeiden.

Fig. 3 zeigt ein Diagramm, aus dem Kennlinien des Luftmassenstromes über dem Ausgangssignal des Massenstromsensors erkennbar sind, wobei die Vollinie für einen erfindungsgemäßen Massenstromsensor gilt und die Strichpunktlinie für einen des Standes der Technik, d. h. ohne Kompensation der Rückströmung. Aus letzterer läßt sich unschwer erkennen, daß im Vergleich zu der Vollinie Betriebebereiche mit Rückströmung vorliegen, und zwar durch Ausschläge der Strichpunktlinie.

Wie bereits erwähnt, kann es vorteilhaft sein, wie in Fig. 4 dargestellt ist, die Massenstromsensoren 3, 4 so anzuordnen, daß der von der Rückströmung beaufschlagte Massenstromsensor einen größeren Flächenteil des Trägers 2 abdeckt als der andere. Hierdurch kann u.U. eine geringere Rückströmgeschwindigkeit oder Wirbelbildungen, Schräganströmung des Trägers usw. kompensiert werden.

Mit der erfindungsgemäßen Vorrichtung läßt sich für Luftmassenwerte mit größerer Vorströmung z. B. folgender Wert für $U_A$ ermitteln:

$$U_A = \frac{U_{M1} + U_{M2}}{2} + K\,(U_{M1} - U_{M2})$$

$$U_A = \frac{5 + 3}{2} + 1\,(5 - 3)$$

$\underline{U_A = 6}$ und für Werte mit größerer Rückströmung

$$U_A = \frac{3 + 5}{2} + 1\,(3 - 5)$$

$\underline{U_A = 2}$

**Patentansprüche**

**1.** Vorrichtung zur Bestimmung des Luftmassenstromes in einem Ansaugkanal (1) einer Brennkraftmaschine, bestehend aus einem Ansaugkanalabschnittgehäuse,

- in dem auf einem Träger (2) ein erster thermischer Massenstromsensor (3), der von dem Ausgangsstrom eines Regelverstärkers (12) beheizt wird, und in Luftströmungsrichtung vor oder hinter dem ersten ein zweiter Massenstromsenor (4) angeordnet sind,
- deren Anfangsanschlüsse (6) mit einer Ausgangsleitung (11) des Regelverstärkers (12) verbunden sind und
- deren Endanschlüssen (5) über Entkopplungswiderstände (13, 14) zusammengeführt und einem Eingang (15) des Regelverstärkers (12) aufgeschaltet sind,
- die Endanschlüsse (5) der Massenstromsensoren (3, 4) darüber hinaus über weitere Entkopplungswiderstände (17, 18) mit der Masse verbunden sind, und
- beide Endanschlüsse (5) der Massenstromsensoren (3, 4) direkt mit einer elektronischen Schaltung (16) verbunden sind, die die beiden Endanschluß- Spannungssignale ($U_{M1}$, $U_{M2}$) nach folgender Formel umformt

$$U_A = (U_{M1} + U_{M2})\,/2 + K\,(U_{M1} - U_{M2}),$$

wobei

$U_A$ dem Luftdurchsatz / der Luftmasse entspricht und K ein beliebig wählbarer Faktor ist und

- ein Temperaturmeßelement (8) auf einem Träger (9) in einem zweiten Brückenzweig der Vorrichtung geschaltet ist, wobei

- der Aufangsanschluß des Temperaturmeßelements (8) mit der Ausgangsleitung (11) des Regelverstärkers (12) verbunden ist,
- der Endanschluß des Temperaturmeßelements (8) über einen Entkopplungswiderstand dem zweiten Eingang des Regelverstärkers (12) aufgeschaltet ist, und
- der zweite Eingang des Regelverstärkers (12) über einen weiteren Entkopplungswiderstand mit der Masse verbunden ist.

2. Vorrichtung nach Anspruch 1, **dadurch gekennzeichnet, daß** der Wert K ($U_{M1}$ - $U_{M2}$) auf in Abhängigkeit von $U_{M1}$, $U_{M2}$ festgelegte Höchstwerte beschränkt wird, um eine Überkompensation zu vermeiden.

3. Vorrichtung nach Anspruch 1 oder 2, **dadurch gekennzeichnet, daß** der Luftmassenstromsensor (4), der überwiegend von der Rückströmung beaufschlagt ist, einen größeren Flächenteil des Trägers (2) einnimmt als der andere.

4. Vorrichtung nach einem der vorstehenden Ansprüche, **dadurch gekennzeichnet, daß** der Luftmassenstromsensor (4), der überwiegend von der Rückströmung beaufschlagt wird, einen kleineren Widerstandswert aufweist als der andere.

5. Vorrichtung nach einem der vorstehenden Ansprüche 3 oder 4, **dadurch gekennzeichnet, daß** die Flächenteile und Widerstandswerte der Massenstromsensoren (3, 4) wie 2 zu 1 aufgeteilt sind.

**Claims**

1. Device for determining the air mass flow in an intake port (1) of an internal combustion engine, consisting of an intake port section housing,

   - in which a first thermal mass flow sensor (3), which is heated by the output flow of a control amplifier (12), is arranged on a support (2), and in front of or behind the first in the direction of flow, a second mass flow sensor (4) is arranged,

   - their start terminals (6) are connected to an output line (11) of the control amplifier (12), and

   - their end terminals (5) are brought together via decoupling resistors (13, 14) and connected to an input (15) of the control amplifier (12),

   - the end terminals (5) of the mass flow sensors (3, 4) are also connected to earth via further decoupling resistors (17, 18), and

   - both end terminals (5) of the mass flow sensors (3, 4) are connected directly to an electronic circuit (16), which converts the two end terminal voltage signals ($U_{M1}$, $U_{M2}$) according to the following formula:

   $$U_A = \frac{U_{M1} + U_{M2}}{2} + K\,(U_{M1} - U_{M2}),$$

   where
   $U_A$ corresponds to the air throughput / air mass and K is a factor which can be chosen arbitrarily, and

   - a temperature measuring element (8) is connected on a support (9) in a second bridge branch of the device:

      - the start terminal of the temperature measuring element (8) being connected to the output line (11) of the control amplifier (12),

      - the end terminal of the temperature measuring element (8) being connected via a decoupling resistor to the second input of the control amplifier (12),

      - the second input of the control amplifier (12) being connected to earth via a further decoupling resistor.

2. Device according to Claim 1, **characterized in that** the value K ($U_{M1}$ - $U_{M2}$) is restricted to maximum values which are defined depending on $U_{M1}$, $U_{M2}$, to avoid over-compensation.

3. Device according to Claim 1 or 2, **characterized in that** the air mass flow sensor (4) to which the reverse flow is mainly applied takes up a larger proportion of the area of the support (2) than the other one.

4. Device according to one of the preceding claims, **characterized in that** the air mass flow sensor (4) to which the reverse flow is mainly applied has a lower resistance than the other one.

5. Device according to one of the preceding claims 3 or 4, **characterized in that** the area parts and resistances of the mass flow sensors (3, 4) are divided as 2 to 1.

**Revendications**

1. Dispositif pour la détermination du débit massique d'air dans un conduit d'admission (1) d'un moteur à combustion interne, formé d'un carter de section de conduit d'admission,

- dans lequel sont disposés sur un support (2) un premier capteur thermique de débit massique (3), chauffé par le courant de sortie d'un amplificateur de réglage (12), et un second capteur de débit massique (4) en amont ou en aval du premier dans le sens d'écoulement d'air,
- dont les connexions initiales (6) sont reliées à une ligne de sortie (11) de l'amplificateur de réglage (12) et
- dont les connexions terminales (5) sont réunies par l'intermédiaire de résistances de découplage (13, 14) et commutées sur une entrée (15) de l'amplificateur de réglage (12),
- les connexions terminales (5) des capteurs de débit massique (3, 4) sont de surcroît reliées à la masse par l'intermédiaire d'autres résistances de découplage (17, 18), et
- les deux connexions terminales (5) des capteurs de débit massique (3, 4) sont directement reliées à un circuit électronique (16) qui convertit les deux signaux de tension des connexions terminales (UM1, UM2) d'après la formule suivante

$$U_A = (U_{M1} + U_{M2})/2 + K (U_{M1} - U_{M2}),$$

$U_A$ correspondant au débit d'air/à la masse d'air et K étant un facteur quelconque au choix et
- un élément thermométrique (8) étant monté sur un support (9) dans une seconde branche de pont du dispositif,
- la connexion initiale de l'élément thermométrique (8) étant reliée à la ligne de sortie (11) de l'amplificateur de réglage (12),
- la connexion terminale de l'élément thermométrique (8) étant commutée par l'intermédiaire d'une résistance de découplage sur la seconde entrée de l'amplificateur de réglage (12), et
- la seconde entrée de l'amplificateur de réglage (12) étant reliée à la masse par l'intermédiaire d'une autre résistance de découplage.

2. Dispositif suivant la revendication 1, **caractérisé en ce que** la valeur K ($U_{M1}$ - $U_{M2}$) est limitée à des valeurs maximales fixées en fonction de $U_{M1}$, $U_{M2}$, pour éviter une surcompensation.

3. Dispositif suivant l'une des revendications 1 et 2, **caractérisé en ce que** le capteur de débit massique d'air (4) qui est sollicité principalement par l'écoulement de retour occupe une plus grande part de surface du support (2) que l'autre.

4. Dispositif suivant l'une des revendications précédentes, **caractérisé en ce que** le capteur de débit massique d'air (4) qui est sollicité principalement par l'écoulement de retour présente une plus petite valeur de résistance que l'autre.

5. Dispositif suivant l'une des revendications précédentes 3 et 4, **caractérisé en ce que** les parts de surfaces et valeurs de résistance des capteurs de débit massique (3, 4) sont réparties comme 2 à 1.

FIG.4

FIG. 1

FIG.3

FIG. 2